Europäisches Patentamt

European Patent Office

Office européen des brevets

(19)

(11)  **EP 1 283 115 B1**

(12)  **FASCICULE DE BREVET EUROPEEN**

(45) Date de publication et mention
de la délivrance du brevet:
**16.06.2004  Bulletin 2004/25**

(51) Int Cl.⁷: **B60C 11/11**, B60C 11/13
// B60C115:00

(21) Numéro de dépôt: **02015222.9**

(22) Date de dépôt: **09.07.2002**

(54) **Profil de surface des éléments de sculpture d'une bande de roulement pour pneumatique**

Oberflächenprofil der Elemente der Reifenlauffläche

Surface profile of tread elements for tyre

(84) Etats contractants désignés:
**AT BE BG CH CY CZ DE DK EE ES FI FR GB GR
IE IT LI LU MC NL PT SE SK TR**

(30) Priorité:  **06.08.2001  FR 0110526**

(43) Date de publication de la demande:
**12.02.2003  Bulletin 2003/07**

(73) Titulaires:
• **Sociéte de Technologie Michelin
63000 Clermont-Ferrand Cedex 09 (FR)**
• **MICHELIN RECHERCHE ET TECHNIQUE S.A.
CH-1763 Granges-Paccot (CH)**

(72) Inventeurs:
• **Merino Lopez, Jose
63200 Riom (FR)**

• **Parmentier, Jean-Fran ois
63100 Cermont-Ferrand (FR)**

(74) Mandataire: **Diernaz, Christian
M. F. P. Michelin,
SGD/LG/PI-F35-Ladoux
63040 Clermont-Ferrand Cedex 09 (FR)**

(56) Documents cités:
**EP-A- 1 020 306**

• **PATENT ABSTRACTS OF JAPAN vol. 015, no.
174 (M-1109), 2 mai 1991 (1991-05-02) & JP 03
038410 A (BRIDGESTONE CORP), 19 février 1991
(1991-02-19)**

## Description

L'invention concerne les sculptures de bandes de roulement pour pneumatiques destinées à équiper les véhicules poids lourd et plus particulièrement la géométrie des surfaces de contact des éléments de relief formant la sculpture desdites bandes avec la chaussée.

Pour obtenir des performances d'adhérence satisfaisantes sur chaussée mouillée, il est connu de pourvoir la bande de roulement d'un pneumatique avec une sculpture formée par une pluralité de rainures délimitant des motifs de relief ayant la forme de nervures ou bien la forme de blocs. En outre, il est également possible de pourvoir une pluralité d'éléments de relief ainsi formés avec au moins une fente se présentant sous la forme d'une rainure de faible largeur (dite incision) voire de largeur nulle ("sipe") de manière à créer un grand nombre d'arêtes pour couper la couche d'eau recouvrant la chaussée mouillée.

Dans le cas de pneumatiques destinés à équiper un essieu moteur d'un véhicule poids lourd (essieu auquel sont transmis des couples moteur et des couples freineur), il est connu de pourvoir les bandes de roulement de ces pneumatiques avec des sculptures formées d'une pluralité de blocs délimités par des rainures d'orientation générale transversale et circonférentielle. Chaque bloc de la sculpture comporte une face dite d'attaque et une face de fuite, chacune desdites faces coupant la face de contact du bloc pour former une arête (respectivement arête d'attaque et arête de fuite), l'arête d'attaque correspondant à ligne de points de la face de contact entrant la première dans le contact du pneumatique avec la chaussée.

Compte tenu de l'existence de mouvements de glissement de faible amplitude entre la bande de roulement d'un pneumatique et la chaussée au cours du roulage d'un véhicule équipé avec ce pneumatique, il se produit une usure progressive et régulière des éléments de sculpture. On observe qu'il peut se superposer à cette usure dite "régulière" une usure dite "irrégulière" car plus prononcée sur certaines régions des éléments de relief formant la sculpture de cette bande et/ou sur certains de ces éléments.

Cette usure irrégulière est le résultat d'une combinaison des mécanismes de roulage et des efforts moteur et freineur appliqués par intermittence sur ces pneumatiques (correspondant respectivement aux phases d'accélération et de freinage du véhicule, de roulage sur routes à plus ou moins forte pente); il se développe alors une usure plus prononcée des blocs au voisinage des arêtes de fuite et/ou d'attaque comparativement à l'usure observée sur le reste de la surface du bloc (usure irrégulière dite usure "dent de scie"). Les conditions de roulage précitées conduisent à des irrégularités de répartition des efforts exercés par la chaussée sur la surface de contact de chaque élément entre le bord d'attaque et le bord de fuite.

Il a été en outre observé que des dispositions permettant d'améliorer la vitesse d'usure moyenne d'un pneumatique conduisent à des usures irrégulières plus marquées en particulier sur les éléments de sculpture situés aux épaules du pneumatique (c'est-à-dire près des bords latéraux de la bande de roulement); réciproquement, les dispositions qui permettent d'éviter des usures irrégulières conduisent à une augmentation de la vitesse moyenne d'usure.

Par exemple, le document de brevet EP384182 de la demanderesse préconise pour réduire les usures irrégulières sur les éléments de sculpture d'une bande de roulement de pneumatique pour poids lourd de réaliser en combinaison avec une inclinaison des incisions une surélévation des bords de fuite par rapport aux bords d'attaque ; si on observe bien une réduction de l'usure irrégulière on constate toutefois une augmentation de l'usure moyenne globale.

Le principe sur lequel repose la présente invention repose sur un pneumatique de type poids lourd comprenant une bande de roulement pourvue d'une sculpture formée d'une pluralité d'éléments de reliefs délimités par des rainures longitudinales ou circonférentielles et des rainures transversales et disposés selon des rangées circonférentielles et sur lequel on distingue les éléments situés axialement sur les bords de ladite bande et formant les épaules du pneumatique et les autres éléments situés axialement entre lesdits bords selon des rangées intermédiaires.

EP-A-1 020 306 décrit un pneumatique selon le préambule de la revendication 1.

L'objectif de l'invention est de proposer une bande de roulement pour pneumatique destiné à des essieux moteur de véhicules poids lourd et dont la vitesse d'usure moyenne est maintenue tout en évitant l'apparition d'usure irrégulière sur certains des éléments de sculpture, sans occasionner un surcoût industriel important.

Cet objectif est atteint par un pneumatique selon la revendication 1.

Dans ce but, le pneumatique selon l'invention comprend une bande de roulement ayant une sculpture définie par une pluralité de rainures d'orientation générale circonférentielle et par une pluralité de rainures d'orientation générale transversale, ces rainures délimitant une pluralité de blocs de gomme disposés selon au moins trois rangées d'orientation générale circonférentielle, les rangées axialement les plus à l'extérieur définissant les bords de la bande encadrant au moins une rangée intermédiaire de blocs, chaque bloc étant délimité par une face de contact, des faces avant et arrière et des faces latérales dans la direction axiale. La face de contact correspond à la partie du bloc en contact avec le sol sous les conditions d'utilisation normales de pression et de charge. Cette face de contact est délimitée par des lignes de contact avant et arrière, la ligne de contact avant étant le lieu des points de la face de contact entrant les premiers en contact avec le sol et la ligne de contact arrière étant le lieu des points de la face de contact quittant en dernier le contact avec le sol. La face avant et la face arrière de chaque bloc coupent la face de contact respectivement selon la ligne avant et la ligne arrière.

Pour chaque bloc on définit une longueur L dans la direction longitudinale de la bande comme étant la distance maximale séparant des points de la ligne avant de la ligne arrière dudit bloc, ces points étant pris deux à deux dans un même plan de coupe longitudinal.

Pour chaque bloc, on définit un volume complémentaire V compris entre la face de contact et la surface d'un cylindre virtuel enveloppant d'axe confondu avec l'axe de rotation du pneumatique équipé avec la bande de roulement, ce cylindre virtuel étant tangent à ladite face de contact. Le volume complémentaire V est en outre délimité par les prolongements des faces avant et arrière et ceux des faces latérales.

Par ailleurs on note G le centre de gravité de chaque volume complémentaire V et $D_G$ la distance dudit centre de gravité G au plan médian du bloc. Par plan médian d'un bloc, il faut entendre un plan contenant l'axe de rotation du pneumatique lorsque la bande équipe un pneumatique, ce plan divisant le bloc en deux parties ayant sensiblement le même volume. Selon que le point G est en avant du plan médian ou en arrière dudit plan cette distance est respectivement positive ou bien négative ; un point est en avant d'un plan médian dès lors qu'il faut faire une rotation du plan médian vers ledit point dans le sens de la rotation du pneumatique.

Le pneumatique selon l'invention est caractérisé en ce que :

- pour chacun des blocs des bords de la bande de roulement, la distance $D_G$ est non nulle et négative, sa valeur absolue étant inférieure au tiers de la longueur L ;
- pour chacun des blocs des rangées intermédiaires et centre, la distance $D_G$ est non nulle et positive, sa valeur absolue étant inférieure au tiers de longueur L.

Une face de contact d'un bloc d'une bande de roulement équipant un pneumatique est enveloppée par une surface virtuelle cylindrique enveloppante quand cette dernière présente au moins une série de points commun avec ladite face, tous les autres points de la face de contact étant situés du même côté par rapport à ladite surface virtuelle. Dans certains cas, on peut avoir une surface continue ou non continue c'est-à-dire formée d'au moins deux surfaces disjointes ; dans d'autres cas la surface commune peut se réduire à une ligne voire à un point.

Vu en coupe dans un plan perpendiculaire à l'axe de rotation du pneumatique, le profil de la face de contact des blocs de sculpture peut être adapté en conséquence pour satisfaire les relations précédemment énoncées.

Préférentiellement, la valeur absolue de la distance $D_G$ de chacun des blocs est comprise entre L/5 et L/7.

Si on note Hg la distance du centre de gravité G du volume complémentaire V d'un bloc quelconque de la bande de roulement mesurée par rapport à la surface virtuelle cylindrique enveloppante dudit bloc, alors il est préférentiel que pour tous les blocs de la sculpture, la relation suivante soit satisfaite :

$$0.1 \text{ mm} < Hg < 1 \text{ mm}$$

pour créer un moment de basculement de chaque bloc approprié pour avoir l'effet souhaité vis-à-vis de l'usure sur l'ensemble de la bande de roulement.

Préférentiellement, le volume complémentaire V est au plus égal à 75% d'un volume $V^*$ construit sur les mêmes faces que celles limitant ledit volume V à la différence près que la face de contact est remplacée par une surface fictive parallèle à la surface enveloppante et passant par le point de la face de contact le plus à l'intérieur par rapport au bloc, c'est-à-dire par rapport au point le plus éloigné de cette surface enveloppante. On constate que, dès que le volume complémentaire V est supérieur à 75% du volume $V^*$ et se rapproche donc de V tout se passe comme si l'effet recherché était en partie annihilé (ces cas correspondent à la présence d'une variation de géométrie de la surface très localisée).

D'autres caractéristiques et avantages de l'invention ressortent de la description faite ci-après en référence aux dessins annexés qui montrent, à titre d'exemples non limitatifs, des formes de réalisation de l'objet de l'invention.

- figure **1** : vue partielle en plan d'une sculpture d'un pneumatique selon l'invention comportant trois rangées de blocs;

- figure **2** : vue en coupe selon la ligne II-II d'un bloc d'une rangée bord de la sculpture montrée à la figure **1**;

- figure **3** : vue en coupe selon la ligne III-III d'un bloc d'une rangée intermédiaire de la sculpture représentée à la figure 1;

- figure **4** : vue en coupe circonférentielle d'une variante de profil d'un bloc selon l'invention.

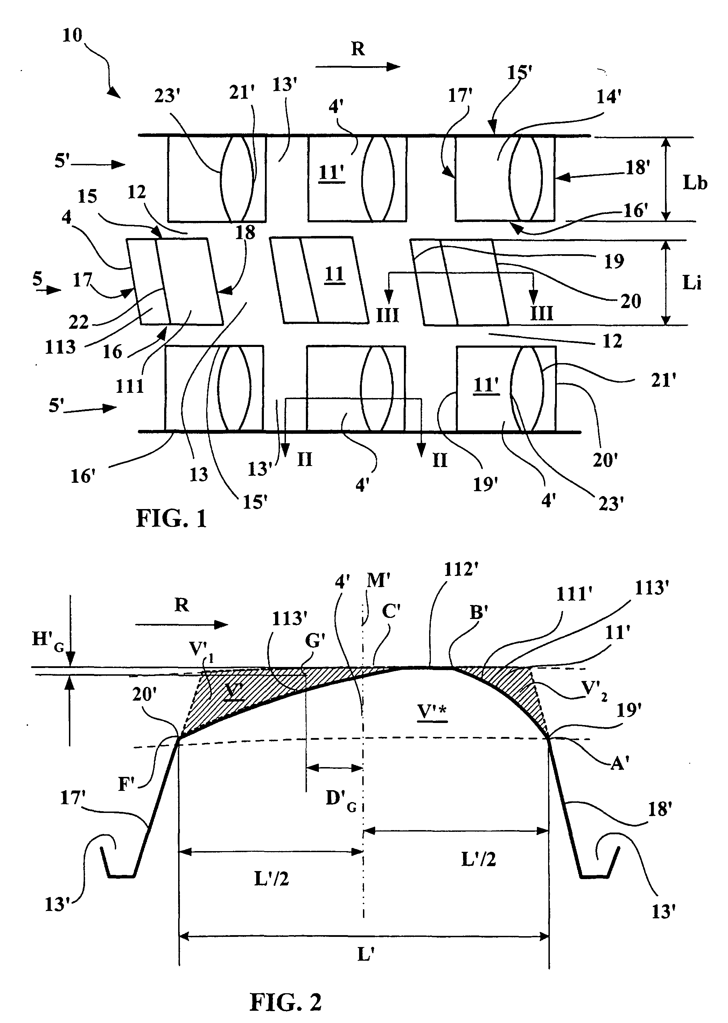

Sur la figure **1** est représentée en plan la surface extérieure d'une bande de roulement 10 d'un pneumatique destiné à être monté sur un essieu avant d'un véhicule poids lourd. Cette bande de roulement 10 est pourvue d'une sculpture comprenant deux rainures 12 d'orientation circonférentielle et une pluralité de rainures d'orientation transversale ou axiale 13 et 13', ces rainures 12, 13 et 13' délimitant une pluralité de blocs de sculpture 4, 4'. Les blocs 4 sont sensiblement disposés suivant une rangée centre 5, tandis que les blocs 4' sont sensiblement disposés suivant deux rangées bord 5'.

Plus précisément, les blocs 4 de la rangée centrale 5 comportent une face de contact 11 destinée à venir en contact avec la chaussée au cours du roulage du pneumatique pourvu de la bande de roulement. La direction repérée par la flèche R sur la figure 1 indique la direction préférentielle de roulage de la bande de roulement décrite. Ces blocs 4 ont ici une longueur L mesurée dans un plan longitudinal entre les points des arêtes de fuite et d'attaque les plus éloignés.

Ces mêmes blocs 4 comportent quatre faces latérales 14, 16, 17, 18, deux d'entre elles, les faces 17 et 18 coupant la face de contact 11 selon, respectivement une ligne arrière 19 et une ligne avant 20. Ces lignes avant et arrière correspondent aux limites avant et arrière de la surface de contact entre la face de contact et la chaussée au cours du roulage du pneumatique soumis aux conditions normales de pression et de charge. Elles correspondent à ce que l'on désigne habituellement et respectivement par arête de fuite et arête d'attaque.

La face de contact 11 de chaque bloc 4 est formée de deux parties de surface 111 et 113, lesdites parties se coupant selon une arête 22. Cette arête 22 est le lieu des points de tangence de la face de contact 11 avec un cylindre virtuel C de même axe que l'axe de rotation du pneumatique, ce cylindre virtuel enveloppant les blocs 4 de la rangée centrale 5. Dans le cas présenté, l'arête 22 est sensiblement rectiligne et oblique par rapport à la direction transversale de la bande de roulement.

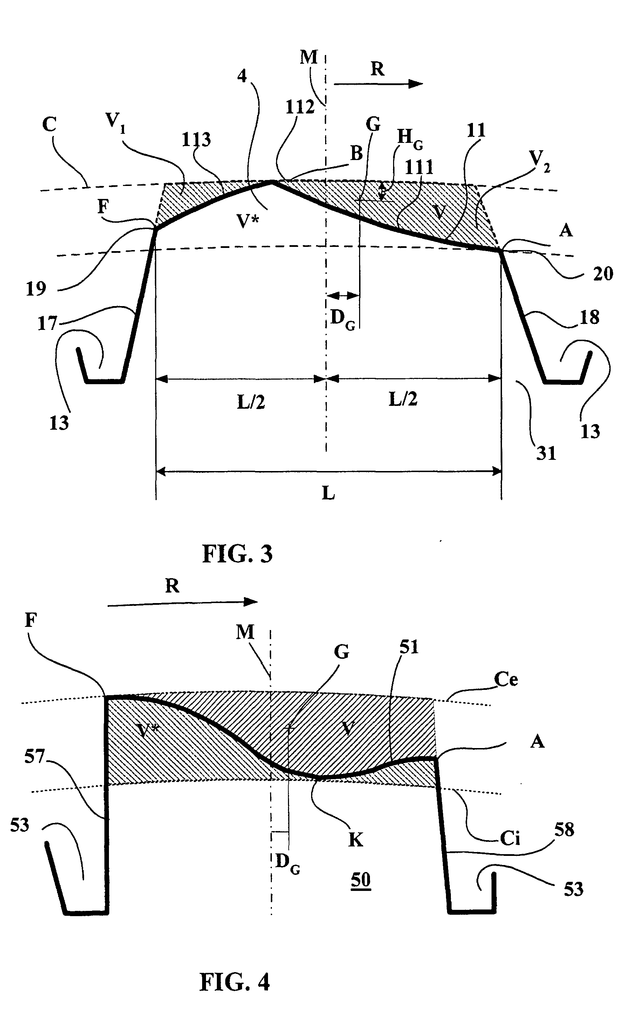

La figure 3 montre une coupe transversale d'un bloc 4 de la rangée centrale de la figure 1 selon la ligne de coupe III-III ; on repère les points d'intersections A, F respectivement des lignes avant et arrière de la face de contact avec ce plan de coupe ainsi que le point B intersection de l'arête 22 avec ce même plan de coupe. Sur cette figure 3, le volume V est composé de deux volumes, un volume avant $V_2$ et un volume arrière $V_1$, le volume avant $V_2$ étant supérieur au volume arrière $V_1$.

Le centre de gravité G du volume complémentaire V est situé à l'intérieur du volume avant $V_2$ à une distance $D_G$ d'un plan médian M divisant le bloc 4 sensiblement en deux volumes égaux (correspondant ici à diviser la longueur L du bloc en deux longueurs égales). Le centre de gravité G est situé en avant du plan médian M, c'est-à-dire qu'il est en avant dudit plan suivant le sens de rotation R. Dans le cas présent, la distance $D_G$ est positive et sensiblement égale à L/9.

De plus, le centre de gravité G est situé à une distance $H_G$ de la surface cylindrique C qui est préférentiellement comprise entre 0.1 mm et 1 mm.

La position décalée du centre de gravité provoque à chaque passage de la face de contact d'un bloc 4 dans le contact un moment de basculement agissant sur ledit bloc.

Ce volume V est préférentiellement compris entre 25% et 75% du volume $V^*$ obtenu comme le volume limité par les mêmes faces et surfaces que le volume V à l'exception de la face de contact qui est remplacée par une surface cylindrique parallèle à la surface C enveloppant le bloc et passant par le point de la face de contact le plus à l'intérieur (dans le cas présent ce point correspond au point A).

En combinaison avec l'arrangement décrit pour les blocs des rangées centrales, les blocs 4' de chaque rangée bord 5' comportent une face de contact 11' dont la géométrie est telle qu'il se forme un moment de basculement au passage dans le contact, ledit moment de basculement étant de signe opposé à celui agissant sur les blocs 4 des rangées centrales.

Ces blocs 4' comportent quatre faces latérales 14', 16', 17', 18', deux d'entre elles, les faces 17' et 18' coupant la face de contact 11' selon, respectivement, une ligne arrière 19' et une ligne avant 20'.

Ces lignes avant et arrière correspondent aux limites avant et arrière de la surface de contact entre la face de contact et la chaussée au cours du roulage du pneumatique soumis aux conditions normales de pression et de charge. Elles correspondent à ce que l'on désigne respectivement par arête de fuite et arête d'attaque du bloc 4'.

La face de contact 11' de chaque bloc 4' est formée de trois surfaces 111', 112' et 113', lesdites surfaces se coupant deux à deux selon des arêtes 22' et 23'. La surface 112' est le lieu des points communs de la face de contact 11' avec un cylindre virtuel C' de même axe que l'axe de rotation du pneumatique, ce cylindre virtuel enveloppant les blocs 4' des rangées bord.

Dans le cas présenté, les arêtes 22' et 23' sont curvilignes et coupent toutes les deux sur les faces latérales 15' et 16' du bloc.

La figure 2 montre une coupe transversale d'un bloc 4' d'une rangée du bord de la figure 1 selon la ligne de coupe II-II ; on repère les points d'intersections A', F' respectivement des lignes avant et arrière de la face de contact avec ce plan de coupe ainsi que les points B', C' intersection des arêtes 21' et 23' avec ce même plan de coupe. Sur cette même figure 2, sont visualisées deux zones hachurées correspondant aux intersections d'un volume avant $V'_2$ et d'un volume arrière $V'_1$ du bloc 4', lesdits deux volumes formant ensemble un volume complémentaire V'.

Ce volume complémentaire V' au bloc 4' est défini comme le volume total délimité par le prolongement des faces avant et arrière 17',18', la surface de contact 111', la surface cylindrique virtuelle C' enveloppant le bloc 4' d'axe parallèle à l'axe de rotation du pneumatique et par les prolongements des faces latérales du bloc 4' à savoir les faces 15' et 16'. Le volume arrière $V'_1$ est défini comme le volume de matière délimité par le prolongement de la face arrière 17', la surface de contact 113', la surface cylindrique virtuelle C' et les prolongements des faces latérales du bloc 4'. Le volume avant V'$_2$ est défini comme le volume de matière délimité par le prolongement de la face avant 18', la surface de contact 111', la surface cylindrique virtuelle C' et les prolongements des faces latérales du bloc 4'.

Pour les blocs 4' des rangées bord, le volume arrière V'$_1$ est supérieur au volume avant V'$_2$.

Le centre de gravité G' du volume complémentaire V' est situé à l'intérieur du volume arrière V'$_1$ à une distance D'$_G$ du plan médian divisant le bloc 4' sensiblement en deux volumes égaux (correspondant ici à diviser la longueur L' du bloc en sensiblement deux longueurs égales). Le centre de gravité G' est situé en arrière du plan médian M', c'est-à-dire qu'il est en arrière dudit plan par rapport au sens de rotation R. Dans le cas présent, la distance D'$_G$ est négative et sensiblement égale à L/6.

La position décalée du centre de gravité G' par rapport au plan médian M' provoque à chaque passage de la face de contact d'un bloc 4 dans le contact un moment de basculement agissant sur ledit bloc.

Ce volume V' est préférentiellement compris entre 25% et 75% du volume V'* obtenu comme le volume limité par les mêmes faces et surfaces que le volume V' à l'exception de la face de contact qui est remplacée par une surface cylindrique parallèle à la surface C' enveloppant le bloc et passant par le point de la face de contact le plus à l'intérieur (dans le cas présent ce point correspond au point A).

La combinaison des caractéristiques des blocs des rangées centrales et des blocs des rangées bord d'une bande de roulement ayant un sens de roulage prédéterminé, confère à cette bande de roulement des résultats en usure régulière et en usure irrégulière qui sont nettement supérieurs à ce qui était connu avant la présente invention.

Les faces latérales avant et arrière peuvent avantageusement présenter des angles de dépouilles, comme montré avec la variante de la figure 1 ou non comme c'est le cas avec une autre variante de bloc montré à la figure 4.

Sur cette figure 4 est montré, en coupe dans un plan perpendiculaire à l'axe de rotation du pneumatique, le profil d'un bloc 50 selon l'invention (ce profil se retrouve, dans ce cas particulier, identique quelle que soit la position du plan de coupe sur le bloc). Ce bloc comprend une face de contact 51 coupant des faces avant et arrière 57, 58 selon des arêtes dont les intersections avec le plan de coupe de la figure correspondent aux points A et F. En outre, la trace de la face de contact sur cette figure passe par un point K qui se trouve, par rapport au fond des rainures 53 délimitant le bloc, à une plus petite hauteur que les hauteurs des points A et F. Ce bloc est aussi limité par des faces latérales non visibles sur la figure 4.

Une surface cylindrique virtuelle Ce enveloppe le bloc 50 en passant par le point F et délimite un volume complémentaire V avec le prolongement de la face 58, la face de contact 51 et les prolongements des faces latérales ; préférentiellement, ce volume V est compris entre 25% et 75% d'un volume V* obtenu comme le volume limité par les mêmes faces et surfaces à l'exception de la face de contact qui est remplacée par une surface Ci cylindrique parallèle à la surface Ce et passant par le point K de la face de contact le plus à l'intérieur du bloc.

Ce bloc est un bloc soit d'une rangée centrale soit d'une rangée bord d'une bande de roulement selon que le centre de gravité G du volume complémentaire V est placé en avant ou en arrière du plan médian M du bloc compte tenu du sens de rotation choisi (dans le cas montré, le point G est en avant du plan compte tenu du sens de rotation R).

Dans une autre variante conforme à l'invention et non représentée sur une figure, chaque bloc d'une sculpture d'une bande de roulement comporte une face de contact de forme générale plane et inclinée d'un angle moyen par rapport à une surface plane tangente à un cylindre passant par l'arête d'attaque ou de fuite dudit bloc. L'inclinaison de la face de contact d'un bloc quelconque est déterminée en fonction de la position de ce bloc : pour un bloc du bord de la bande de roulement, l'arête d'attaque est radialement plus éloignée de l'axe de rotation du pneumatique pourvu de cette bande que l'arête de fuite, tandis que pour un bloc des rangées intermédiaires, c'est le contraire. La différence de hauteur radiale entre les points de ligne d'attaque et les points de la ligne de fuite est préférentiellement comprise entre 0.3 mm et 3 mm. On peut choisir une même valeur d'angle inclinaison des faces de contact de tous les blocs ou bien choisir des angles ayant des valeurs différentes.

Ce qui a été décrit ici s'applique à tout type de bande de roulement qu'elle soit réalisée sur le pneumatique pendant la confection dudit pneumatique ou bien qu'elle soit réalisée séparément du pneumatique sous forme d'anneau fermé.

## Revendications

1. Pneumatique comprenant une bande de roulement (10) ayant une sculpture comportant un sens préférentiel de roulage R, cette sculpture étant définie par une pluralité de rainures (12) d'orientation générale circonférentielle et par une pluralité de rainures (13, 13') d'orientation générale transversale, ces rainures délimitant une pluralité de blocs (4, 4') disposés selon au moins trois rangées d'orientation générale circonférentielle, les rangées (5') axialement les plus à l'extérieur définissant les bords de la bande encadrant au moins une rangée intermédiaire (5) de blocs, chaque bloc étant délimité par une face de contact, des faces avant et arrière et des faces latérales, les faces avant et arrière coupant la face de contact respectivement selon des lignes de contact avant et arrière, pour chaque bloc, étant défini :

- une longueur de bloc L dans la direction longitudinale de la bande comme étant la distance maximale séparant des points de la ligne de contact avant de la ligne de contact arrière dudit bloc, ces points étant pris deux à deux dans un même plan de coupe longitudinal;

- un volume complémentaire V compris entre la face de contact et la surface enveloppante d'un cylindre (C, C') virtuel d'axe confondu avec l'axe de rotation du pneumatique équipé avec la bande de roulement, ce cylindre virtuel étant tangent à ladite face de contact, le volume complémentaire V étant en outre délimité par les prolongements des faces avant et arrière et ceux des faces latérales;

- un centre de gravité G du volume complémentaire V, ce centre étant situé à une distance $D_G$ du plan médian du bloc, ledit plan divisant ledit bloc en deux volumes sensiblement égaux, correspondant à diviser la longueur L du bloc en deux longueurs égales ;

ce pneumatique étant **caractérisé en ce que** :

- pour chacun des blocs (4') des bords (5') de la bande de roulement, la distance $D_G$ est non nulle, la distance DG est négative et inférieure en valeur absolue au tiers de la longueur L;

- pour chacun des blocs (4) des rangées intermédiaires (5), la distance $D_G$ est non nulle, la distance DG est positive et inférieure en valeur absolue au tiers de la longueur L,

étant entendu, par convention, qu'une distance $D_G$ est positive dès lors que le centre G est en avant du plan médian M, M' du bloc considéré, c'est-à-dire que le sens du déplacement qui fait passer ce plan médian audit point est identique au sens de rotation préférentiel R du pneumatique.

2. Pneumatique selon la revendication 1 **caractérisé en ce que** la distance $H_G$ du centre de gravité du volume complémentaire de chaque bloc (4, 4') de la bande de roulement mesurée par rapport à la surface virtuelle cylindrique enveloppante dudit bloc est telle que :

$$0.1 \text{ mm} < H_G < 1 \text{ mm}.$$

3. Pneumatique selon la revendication 1 ou la revendication 2 **caractérisé en ce que** le volume complémentaire V de chaque bloc (4, 4') est au plus égal à 75% du volume V* construit sur les mêmes faces que celles limitant ledit volume V à la différence près que la face de contact est remplacée par une face fictive parallèle à la surface enveloppante (C, C') et passant par la ligne de contact avant ou arrière la plus éloignée de la surface enveloppante du bloc.

4. Pneumatique selon la revendication 3 **caractérisé en ce que** le volume complémentaire V de chaque bloc (4, 4') est au moins égal à 25% du volume V*.

5. Pneumatique selon l'une des revendications 1 à 4 **caractérisé en ce que** la valeur absolue de la distance $D_G$ de chacun des blocs est comprise entre L/5 et L/7.

**Patentansprüche**

1. Luftreifen mit einer Lauffläche (10), die ein Profil mit einer bevorzugten Fahrrichtung R aufweist, wobei dieses Profil durch eine Vielzahl von Rillen (12) mit allgemeiner Umfangsausrichtung und durch eine Vielzahl von Rillen (13, 13') mit allgemeiner Querausrichtung definiert wird, wobei diese Rillen eine Vielzahl von Blökken (4, 4') begrenzen, die in mindestens drei Reihen von allgemeiner Umfangsausrichtung angeordnet sind, wobei die axial am weitesten außen liegenden Reihen (5') die Ränder der Lauffläche definieren, die mindestens eine Zwischenreihe (5) von Blöcken umrahmen, wobei jeder Block von einer Kontaktfläche, einer Vorderfläche und einer Hinterfläche und Seitenflächen begrenzt wird, wobei die Vorderfläche und die Hinterfläche die Kontaktfläche gemäß vorderen bzw. hinteren Kontaktlinien schneiden, wobei für jeden Block definiert ist:

- dass eine Blocklänge L in Längsrichtung der Lauffläche als die maximale Entfernung gilt, die die Punkte der vorderen Kontaktlinie von der hinteren Kontaktlinie des Blocks trennt, wobei diese Punkte paarweise in einer gleichen Längsschnittebene gesehen werden;
- ein komplementäres Volumen V, das zwischen der Kontaktfläche und der Hüllfläche eines virtuellen Zylinders (C, C') liegt, dessen Achse mit der Drehachse des mit der Lauffläche ausgestatteten Luftreifens zusammenfällt, wobei dieser virtuelle Zylinder die Kontaktfläche tangiert, wobei das komplementäre Volumen V außerdem von den Verlängerungen der Vorderfläche und der Hinterfläche und denen der Seitenflächen begrenzt wird;
- ein Schwerpunkt G des komplementären Volumens V, wobei dieser Schwerpunkt sich in einer Entfernung $D_G$ von der Mittelebene des Blocks befindet, wobei die Ebene den Block in zwei im wesentlichen gleiche Volumina teilt, die der Teilung der Länge L des Blocks in zwei gleiche Längen entsprechen,

wobei dieser Luftreifen **dadurch gekennzeichnet ist, dass**:

- für jeden der Blöcke (4') der Ränder (5') der Lauffläche die Entfernung $D_G$ ungleich Null ist, die Entfernung $D_G$ negativ ist und ihr Absolutwert unter einem Drittel der Länge L liegt;
- für jeden der Blöcke (4) der Zwischenreihen (5) die Entfernung $D_G$ ungleich Null ist, die Entfernung $D_G$ positiv ist und ihr Absolutwert unter einem Drittel der Länge L liegt,

wobei üblicherweise eine Entfernung $D_G$ dann positiv ist, wenn der Schwerpunkt G sich vor der Mittelebene M, M' des betrachteten Blocks befindet, d. h. dass die Bewegungsrichtung, die diese Mittelebene zum Punkt gehen lässt, gleich der bevorzugten Drehrichtung R des Luftreifens ist.

2. Luftreifen nach Anspruch 1, **dadurch gekennzeichnet, dass** die Entfernung $H_G$ des Schwerpunkts des komplementären Volumens jedes Blocks (4, 4') der Lauffläche, gemessen in Bezug auf die virtuelle zylindrische Hüllfläche des Blocks so ist, dass:

$$0{,}10 \text{ mm} < H_G < 1 \text{ mm}.$$

3. Luftreifen nach Anspruch 1 oder 2, **dadurch gekennzeichnet, dass** das komplementäre Volumen V jedes Blocks (4, 4') höchstens gleich 75% des Volumens $V^*$ ist, das auf den gleichen Flächen wie diejenigen aufgebaut wird, welche das Volumen V begrenzen, mit dem einzigen Unterschied, dass die Kontaktfläche von einer fiktiven Fläche ersetzt wird, die parallel zur Hüllfläche (C, C') liegt und über die vordere oder hintere Kontaktlinie verläuft, die am weitesten von der Hüllfläche des Blocks entfernt ist.

4. Luftreifen nach Anspruch 3, **dadurch gekennzeichnet, dass** das komplementäre Volumen V jedes Blocks (4, 4') mindestens gleich 25% des Volumens $V^*$ ist.

5. Luftreifen nach einem der Ansprüche 1 bis 4, **dadurch gekennzeichnet, dass** der Absolutwert der Entfernung $D_G$ jedes der Blökke zwischen L/5 und L/7 liegt.

**Claims**

1. Tyre comprising a tread (10) having a tread pattern having a preferred running direction R, this tread pattern being defined by a plurality of grooves (12) of generally circumferential orientation and by a plurality of grooves (13, 13') of generally transverse orientation, these grooves delimiting a plurality of blocks (4, 4') arranged in at least three rows of generally circumferential orientation, the axially outermost rows (5') defining the edges of the tread enclosing at least one intermediate row (5) of blocks, each block being delimited by a contact face, front and rear faces and lateral faces, the front and rear faces intersecting the contact face along front and rear contact lines, respectively, there being defined for each block:

- a block length L in the longitudinal direction of the tread as being the maximum distance separating points of the front contact line from the rear contact line of the said block, these points being taken in pairs in the same longitudinal section plane;

- a complementary volume V between the contact face and the enveloping surface of a virtual cylinder (C, C') having an axis coinciding with the axis of rotation of the tyre equipped with the tread, this virtual cylinder being tangent to the said contact face, the complementary volume V being further delimited by the continuations of the front and rear faces and those of the lateral faces;

- a centre of gravity G of the complementary volume V, this centre being situated at a distance $D_G$ from the mid-plane of the block, the said plane dividing the said block into two substantially equal volumes corresponding to dividing the length L of the block into two equal lengths;

this tyre being **characterised in that**:

- for each of the blocks (4') of the edges (5') of the tread, the distance $D_G$ is not zero, the distance $D_G$ is negative and less, in terms of absolute value, than a third of the length L;

- for each of the blocks (4) of the intermediate rows (5), the distance $D_G$ is not zero, the distance $D_G$ is positive and less, in terms of absolute value, than a third of the length L,

it being understood, by convention, that a distance $D_G$ is positive when the centre G is in front of the mid-plane M, M' of the block in question, that is to say that the direction of the displacement which causes this mid-plane to pass the said point is identical to the preferred direction of rotation R of the tyre.

2. Tyre according to Claim 1, **characterised in that** the distance $H_G$ of the centre of gravity of the complementary volume of each block (4, 4') of the tread measured relative to the virtual enveloping cylinder surface of the said block is such that:

$$0.1 \text{ mm} < H_G < 1 \text{ mm}.$$

3. Tyre according to Claim 1 or Claim 2, **characterised in that** the complementary volume V of each block (4, 4') is at most equal to 75% of the volume $V^*$ constructed on the same faces as those limiting the said volume V except that the contact face is replaced by a fictitious face parallel to the enveloping surface (C, C') and passing through the front or rear contact line farthest from the enveloping surface of the block.

4. Tyre according to Claim 3, **characterised in that** the complementary volume V of each block (4, 4') is at least equal to 25% of the volume $V^*$.

5. Tyre according to one of Claims 1 to 4, **characterised in that** the absolute value of the distance $D_G$ of each of the blocks is between U5 and L/7.

**FIG. 1**

**FIG. 2**

**FIG. 3**

**FIG. 4**